**Europäisches Patentamt**

**European Patent Office**

**Office européen des brevets**

(19)

(11) Veröffentlichungsnummer: **0 172 246**
**B1**

(12) EUROPÄISCHE PATENTSCHRIFT

(45) Veröffentlichungstag der Patentschrift: **10.10.90**

(51) Int. Cl.⁵: **B 01 D 53/36**

(21) Anmeldenummer: **85901405.2**

(22) Anmeldetag: **21.02.85**

(86) Internationale Anmeldenummer:
**PCT/EP85/00063**

(87) Internationale Veröffentlichungsnummer:
**WO 85/03645 29.08.85 Gazette 85/19**

(54) **VERFAHREN UND VORRICHTUNG ZUR KATALYTISCHEN REINIGUNG DER ABGASSE VON FEUERUNGSANLAGEN.**

(30) Priorität: **24.02.84 DE 3406657**

(43) Veröffentlichungstag der Anmeldung:
**26.02.86 Patentblatt 86/09**

(45) Bekanntmachung des Hinweises auf die Patenterteilung:
**10.10.90 Patentblatt 90/41**

(84) Benannte Vertragsstaaten:
**GB**

(56) Entgegenhaltungen:
**GB-A-1 602 812**
**GB-A-2 027 609**

**Japanese Patents Report, Band 82, Nr. 34, 24 September 1982, Derwent Publications, London (GB) siehe Zusammenfassung J 82039168**

(73) Patentinhaber: **SRM SVENSKA ROTOR MASKINER AKTIEBOLAG**
**P.O. Box 15085**
**S-10465 Stockholm (SE)**

(72) Erfinder: **FETZER, Wolfgang**
**Kirschgartenstrasse 89**
**D-6900 Heidelberg (DE)**

(74) Vertreter: **Helber, Friedrich G., Dipl.-Ing. et al Patentanwälte Dipl.-Ing. F. G. Helber Dipl.-Ing. J.K. Zenz Giesser Weg 47**
**D-6144 Zwingenberg (DE)**

EP 0 172 246 B1

**Beschreibung**

Die Erfindung betrifft ein Verfahren zur selektiven Beseitigung der Stickoxide in den Abgasen von Feuerungsanlagen sowie eine Vorrichtung zur Durchführung des Verfahrens durch Einleiten chemischer Verbindungen in die aus der Feuerungsanlage austretenden Abgase zur Reaktion mit den Stickoxiden und anschließende Führung der Abgase durch einen Katalysator zur Beschleunigung und/oder Einleitung der Reaktion.

Es ist bereits bekannt, zur selektiven Reduktion der Stickoxide dampfförmiges Ammoniak ($NH_3$) in Mischung mit Luft, unter Druck oder druckeos in Wasser gelöst in den aus der Feuerungsanlage austretenden Abgasstrom einzudosieren, wobei durch eine Mischstrecke mit entsprechenden Einbauten die Ausbildung einer strähnenfreien Ammoniak- und Temperaturverteilung im Abgasstrom innerhalb der anschließenden Rauchgaskanäle angestrebt wird. Anschließend wird das Gemisch durch einem umlaufenden Regenerativ-Wärmetauscher zur Übertragung der Abgaswärme an die der Feuerung zugeführte Verbrennungsluft vorgeschalteten Katalysator geführt. Der Katalysator ist als Festbett-Reaktor mit vorzugsweise vertikal nach unten gerichteter Strömung ausgebildet. In dem Reaktor ist eine Wabenstruktur enthalten, die als katalytisch wirkenden Stoff eine Vanadium-Verbindung aufweist. Der Druckverlust des Festbett-Reaktors wird bei der Bemessung des Rauchgasgebläses berücksichtigt. Durch eine vertikal nach unten gerichtete Strömung im Reaktor soll der Ablagerung fester Verunreinigungen innerhalb des Katalysators begegnet bzw. diese in Grenzen gehalten werden. Die auftretenden Beläge werden durch Blasen mittels Druckluft bzw. Dampf diskontinuierlich beseitigt. Die Standzeit der Katalysatoren innerhalb des Reaktors beträgt—je nach Kessel, Fahrweise und Zusammensetzung der als Brennstoff eingesetzten Kohle—mehr als 2 Jahre.

Aus der JP—B51087471 (Japanese Patents Report, Vol. 82, No. 34, 24. September 1982, Abstract J 83039168) ist eine Vorrichtung bekannt, bei welcher der Feuerungsanlage ein umlaufender Regenerativ-Wärmetauscher zugeordnet ist, in dessen Gehäuse ein gleichfalls umlaufender Katalysator eingebaut ist. Der Träger der katalytisch wirksamen Elemente und die der wärmetauschenden Speichermasse sind über eine Welle miteinander verbunden. Der gemeinsame Antrieb der beiden Träger erfolgt über ein Ritzel eines Elektromotors, der in einen Zahnkranz des Trägers der wärmetauschenden Speichermassen eingreift. Der Katalysator ist im Abgasstrom der wärmetauschenden Speichermassen heißgasseitig vorgeschaltet und enthält eine Schüttschicht von katalytisch wirkenden Elementen. Eine Durchströmung des Katalysators mit der der Feuerungsanlage zuzuführenden Vebrennungsluft (oder auch einem anderen Reinigungsgasstrom) erfolgt jedoch nicht. Vielmehr soll die Reinigung der als Schüttschicht vorliegenden Katalysatorelemente extern, d.h. durch Austragen aus dem Katalysatorträger, Reinigen und erneutes Zurückführen in den Träger erfolgen, wofür entsprechend aufwendige Einrichtungen zur Entnahme, Reinigung und Zurückführung der Katalysatorelemente aus dem bzw. in den Katalysatorträger erforderlich sind.

Demgegenüber liegt der Erfindung die Aufgabe zugrunde, ein Verfahren zur katalytischen Reinigung der Abgase von Feuerungsanlagen sowie einer Vorrichtung zur Durchführung dieses Verfahrens anzugeben, bei welchen eine ständige zonenweise Reinigung der Katalysatorelemente des Katalysators während des Betriebs möglich ist, ohne daß hierfür aufwendige gesonderte externe Reinigungsvorrichtungen erforderlich sind.

Ausgehend von einem Verfahren zur selektiven Beseitigung der Stickoxide in den Abgasen von Feuerungsanlagen durch Einleiten chemischer Verbindungen in die aus der Feuerungsanlage austretenden Abgas zur Reaktion mit den Stickoxiden und anschließende Führung der Abgase durch einen Katalysator zur Beschleunigung und/ oder Einleitung der Reaktion, wobei die Durchströmung des Katalysators in einer nur einen Abschnitt des Katalysators umfassenden Zone erfolgt, deren Lage kontinuierlich oder schrittweise geändert und in den Abgasen enthaltene Wärme durch regenerativen Wärmetausch auf die der Feuerungsanlage zuzuführende Verbrennungsluft übertragen wird, wird diese Aufgabe erfindungsgemäß dadurch gelöst, daß der Katalysator mit der der Feuerungsanlage zuzuführenden Verbrennungsluft als Reinigungsgasstrom in eine jeweils zu der von den Abgasen durchströmten Zone versetzten Zone des Katalysators, vorzugsweise im Gegenstrom, zu den Abgasen durchströmt wird. Durch den ständig einwirkenden, als Reinigungsgasstrom wirkenden Verbrennungsluftstrom werden die aus dem eintretenden Abgasstrom auf den Oberflächen der Katalysatorelemente, insbesondere im Bereich des Eintritts ausgeschiedenen, vom Abgasstrom mitgeführten Verunreinigungen laufend wieder entfernt, wodurch die Wirksamkeit des Katalysators über wesentlich längere Reisezeiten hinweg erhalten bleibt. Besonders wirksam ist hierbei eine Verfahrensweise, bei welcher der Reinigungs-Gasstrom im Gegenstrom zu den in den Katalysator eintretenden Abgasen geführt wird.

Zur Durchführung des Verfahrens wird von einer Vorrichtung mit einem einerseits von den aus der Feuerungsanlage austretenden Abgasen und andererseits von der der Feuerungsanlage zuzuführenden Verbrennungsluft durchströmten Abgaswärme auf die Verbrennungsluft übertragenden drehantreibbaren Regenerativ-Wärmetauscher und mit einem in unterschiedlichen Zonen von den Abgasen durchströmten Katalysator, der von in einem Träger angeordneten Katalysatorelementen gebildet wird und eine Antriebsvorrichtung zur schrittweisen oder kontinuierlichen Drehung des Trägers relativ zu den Gasanschlüssen für die Abgase aufweist, wobei strömungsseitig vor dem Katalysator eine Einrichtung zur Einleitung wenigstens einer mit den in den Abgasen enthaltenen Stickoxiden reagierenden chemischen Verbindung vorgesehen ist, ausgegangen, welche dadurch gekennzeichnet ist, daß der Katalysator zu den Gasanschlüssen für die Abgase versetzt Gasanschlüsse für die Zu- und Abfuhr eines Reinigungsgases aufweist, und daß diese Gasanschlüsse für das Reinigungsgas in Reihe zu den Verbrennungsluft-Anschlüssen des Regenerativ-Wärmetauschers geschaltet sind. Der Katalysator kann dabei der Speichermasse des umlaufenden Regenerativ-Wärmetauschers für die Übertragung der Abgaswärme an die der Feuerungsanlage zuzuführende Verbrennungsluft im Abgasstrom vor- und/oder nachgeschaltet sein, wobei der Katalysator also ggf. auch in die Verbrennungsluft-Vorwärmung in der Funktion als Wärmetauscher einbezogen werden kann.

Dem Träger der Katalysatorelemente und dem der Speicherelemente des Regenerativ-Wärmetauschers wird zweckmäßig ein gemeinsamer Antrieb zugeordnet, wobei der Träger der Katalysatorelemente und der Träger der Speicherelemente beispielsweise durch eine gemeinsame Welle gekoppelt sein können. Alternativ können die Katalysatorelemente und die Speicherelemente des Regenerativ-Wärmetauschers auch in einem gemeinsamen Träger angeordnet sein, der dann innerhalb eines gemeinsamen Gehäuses umläuft. Katalysator und Regenerativ-Wärmetauscher sind dann also zu einer einzigen Baugruppe vereinigt.

Dabei kann die Ausgestaltung dann auch so getroffen werden, daß die Speicherelemente des Regenerativ-Wärmetauschers zumindest teilweise zugleich selbst als Katalysatorelemente ausgebildet sind. Praktisch wird der Katalysator dann also in den Regenerativ-Wärmetauscher integriert, in-dem die im Betrieb des Wärmetauschers von den Abgasen und der Verbrennungsluft überströmten Oberflächen der Speichermasse mit einer oder mehreren katalytisch wirkenden Verbindung(en) beschichtet sind.

Die Katalysatorenelemente können also mit katalytisch wirkenden Verbindungen beschichtete, vorzugsweise metallische Platten oder Gitter sein, wobei unter der katalytisch wirkenden Beschichtung noch ein Zwischenträger als Haftungsvermittler vorgesehen sein kann.

Andererseits besteht die Möglichkeit, die Katalysatorelemente oder den Zwischenträger aus einem offenporigen, insbesondere keramischen Substrat auszubilden, welches mit einer oder mehreren katalytisch wirkenden Verbindung(en) versehen ist.

Anstelle flächenförmiger Katalysatorelemente können diese auch als Schüttkörper ausgebildet sein, welche in einem geeignet ausgebildeten Träger des Katalysators ein von den zu reinigenden Abgasen bzw. dem Reinigungs-Gasstrom durchströmbares Schüttungsbett bilden.

Anstelle einer Beschichtung können die Katalysatorelemente die katalytisch wirkende(n) Verbindung(en) auch als Legierungsbestandteil(e) enthalten.

Wenn die zu reinigenden Abgase neben den Stickoxyden noch weitere katalytisch zersetzbare schädliche Bestandteile enthalten, kann es von Vorteil sein, wenn der Katalysator in axialer Richtung mehrere aufeinanderfolgende Lagen von Katalysatorelementen aufweist, die mit unterschiedlichen katalytisch wirkenden Verbindungen versehen sind, die jeweils spezifische Katalysatorwirkung für spezielle Verunreinigungen haben oder die bei dem jeweils herrschenden Temperaturniveau eine optimale katalytische Wirkung zeigen.

Wenn der Reinigungs-Gasstrom nicht von der der Feuerungsanlage zuzuführenden Verbrennungsluft selbst, sondern einem gesonderten Gasstrom gebildet werden soll, der beispielsweise auch von den zuvor gereinigten Abgasen gebildet werden kann, empfiehlt es sich, den Träger der wärmetauschenden Elemente und der Katalysatorelemente innerhalb des umschließenden Gehäuses in Umfangsrichtung mit einem Abgas-, einem Luft- und einem Regenerationssektor zu versehen, in welchem die Reaktivierung der katalytischen Verbindung bzw. das Ausblasen der abgesetzten Katalysatorgifte erfolgt.

Die Erfindung ist in der folgenden Beschreibung dreier Ausführungsbeispiele in Verbindung mit der Zeichnung näher erläutert, und zwar zeigt:

Fig. 1 ein schematisches Schaltbild einer Feuerungsanlage mit nachgeschaltetem Katalysator und Regenerativ-Wärmetauscher;

Fig. 2 ein Schaltbild einer abgewandelten Feuerungsanlage, bei welcher der nachgeschaltete Katalysator und Regenerativ-Wärmetauscher zu einer gemeinsamen Baugruppe zusammengefaßt sind; und

Fig. 3 ein Schaltbild eines weiteren Ausführungsbeispiels, bei welchem als Reinigungs-Gasstrom für den getrennt vom Regenerativ-Wärmetauscher angeordneten Katalysator das gereinigte Abgas selbst verwendet wird.

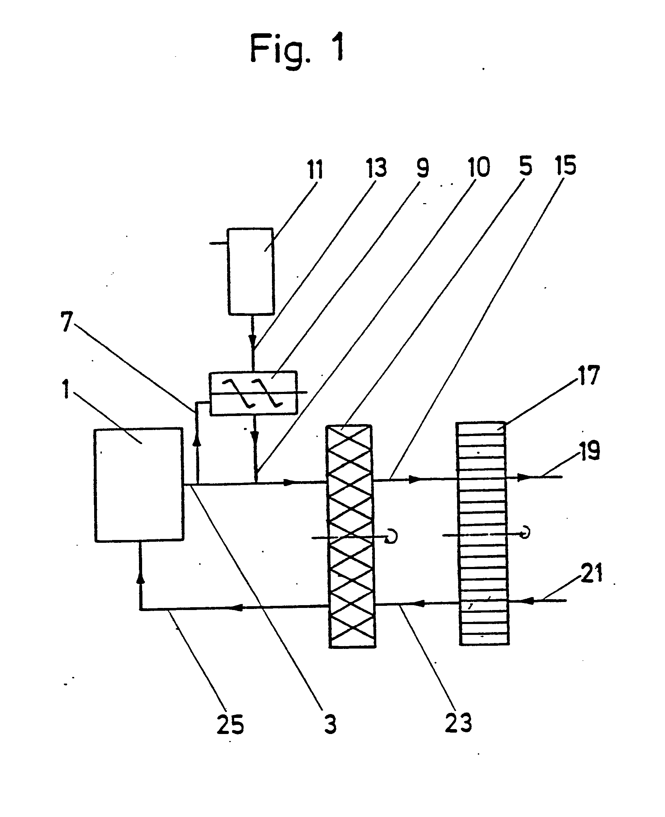

Bei der in Fig. 1 schematisch gezeigten Anlage gelangen die Abgase aus der Feuerungsanlage 1 über eine Leitung 3 zu einem Katalysator 5. Aus dieser Abgasleitung 3 wird ein Teilstrom der Abgase über eine Leitung 7 einer Mischstrecke 9 zugeleitet, in welche eine chemische Verbindung (z.B. $NH_3$) aus einem Vorratsbehälter 11 über eine Leitung 13 zugeführt und in den Abgasteilstrom eindosiert wird. Anschließend wird der Abgas-Teilstrom über die Leitung 10 in den Hauptstrom der Abgase zurückgeführt und dem schrittweise oder kontinuierlich umlaufenden Katalysator 5 zugeführt. Die den Katalysator verlassenden, mit Wasser und Stickstoff beladenen Abgase gelangen über die Leitung 15 anschließend in den umlaufenden Regenerativ-Wärmetauscher 17 zur Übertragung der Abgaswärme an die der Feuerungsanlage 1 zuzuführende Verbrennungsluft. Im Anschluß an den umlaufenden Regenerativ-Wärmetauscher gelangen die Abgase über die Abgasleitung 19 in die—nicht dargestellte—Anlage zur Abscheidung der Schwefelverbindungen und Wiederaufheizung für den Eintritt in den Abgaskamin.

Die der Feuerungsanlage 1 zugeführte Verbrennungsluft tritt über die Leitung 21 zunächst in den umlaufenden Regenerativ-Wärmetauscher 17 ein, wird in diesem im Gegenstrom zu den Abgasen vorgewärmt und anschließend über die Leitung 23 zum Katalysator 5 und — gleichfalls im Gegenstrom zu den Abgasen — durch den Katalysator hindurchgeführt, wo sie ständig die zuvor auf den Oberflächen der Katalysatorelemente neidergeschlagenen Verunreinigungen aus den Abgasen ausblasen und so einer Vergiftung der Katalysatorflächen vorbeugen. Von der der Eintrittsseite des Katalysators gegenüberliegenden Austrittsseite wird die Verbrennungsluft über die Leitung 25 der Feuerungsanlage unmittelbar zugeführt. Dem Katalysator 5 und dem Regenerativ-Wärmetauscher 17 können grundsätzlich gesonderte Antriebe zugeordnet sein. Zur Verringerung des konstruktiven Aufwands empfiehlt es sich jedoch, den beiden Einheiten einen gemeinsamen Antrieb zuzuordnen, indem beispielsweise der Regenerativ-Wärmetauscher in üblicher Weise motorisch angetrieben und der Katalysator mit dem Wärmetauscher über eine Welle gekoppelt wird.

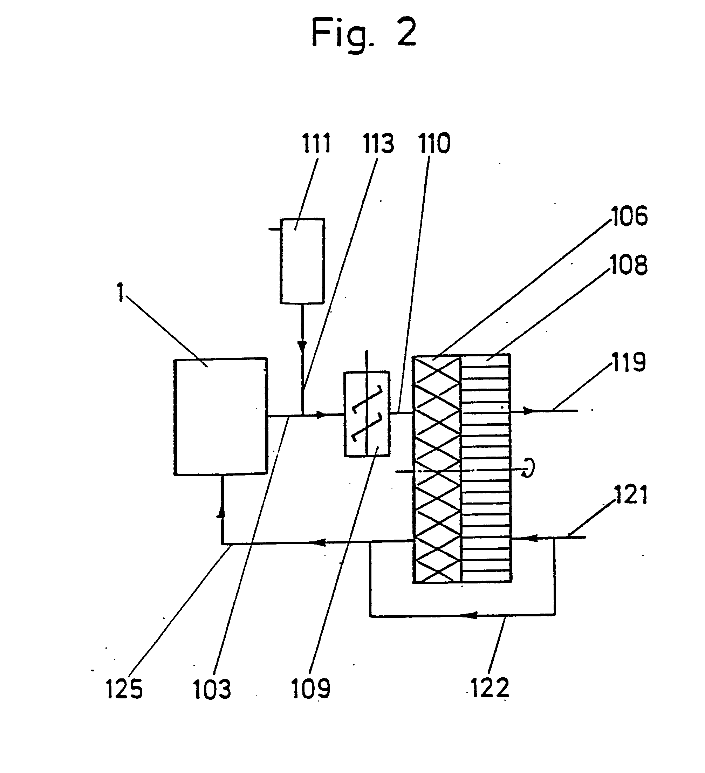

Bei der Ausgestaltung gemäß Fig. 2 werden die die Feuerungsanlage 1 verlassenden, in die Abgasleitung 103 eintretenden Abgase in ihrer Gesamtheit einer Mischstrecke 109 zugeführt. Vor dieser Mischstrecke wird die chemische Verbindung aus einem Vorratsbehälter 111 über die Leitung 113 eingeführt und innerhalb der Mischstrecke in den Abgasen weiter verteilt. Der Abgasstrom gelangt über die an die Mischstrecke angeschlossene Abgasleitung 110 zunächst in das Katalysatorbett 106 und nach Verlassen desselben unmittelbar in die Speichermasse 108 des Regenerativ-Wärmetauschers. Abweichend von der in Fig. 1 dargestellten Lösung ist der Speichermassenträger des kontinuierlich umlaufenden Regenerativ-Wärmetauschers also zugleich als Träger des Katalysatorbetts ausgebildet, so daß dieses und die Speichermasse innerhalb eines sie gemeinsam umschließenden Gehäuses angetrieben und von den Abgasen und der Verbrennungsluft im Gegenstrom beaufschlagt werden. Nach Verlassen der Speichermasse werden die Gase in der üblichen Weise über die Leitung 119 einer Abgas-Reinigungsanlage zur Beseitigung der Schwefelverbindungen, ggf. unter Vorschaltung eines Filters zugeleitet und nach Wiederaufwärmung über den Kamin abgeführt.

Die Verbrennungsluft wird über eine Leitung 121 im Gegenstrom zu den Abgasen durch die Speichermasse 108 und anschließend das Katalysatorbett 106 geführt. Von der Verbrennungsluftleitung 121 wird vor Eintritt in die Speichermasse ein Teilstrom abgezweigt und über die Leitung 122 im Bypaß zum kombinierten Katalysator-Wärmetauscher in eine Leitung 125 geführt, in welcher der Hauptstrom der Verbrennungsluft vom Katalysator-Wärmetauscher zur Feuerungsanlage 1 strömt.

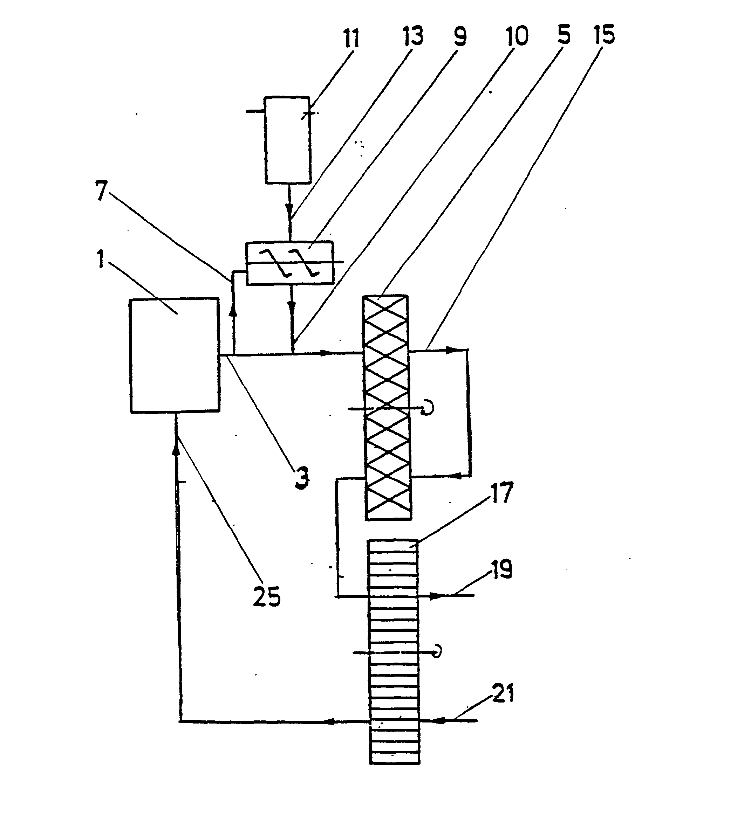

Das in Fig. 3 gezeigte Aufführungsbeispiel entspricht der in Fig. 1 gezeigten Ausgestaltung in gewisser Weise und gleiche Teile der Anlage sind mit gleichen Bezugszeichen versehen, so daß es genügt, nachstehend nur die getroffenen schaltungsmäßigen Unterschiede herauszuarbeiten. Der Katalysator 5 und der Regenerativ-Wärmetauscher 17 sind wiederum als getrennte Einheiten ausgebildet. Im Unterschied zum ersten Ausführungsbeispiel wird jedoch der aus dem Katalysator 5 in die Leitung 15 austretende Abgasstrom als Reinigungs-Gasstrom im Gegenstrom durch den Katalysator 5 zurükgeführt und erst dann zur Aufheizung der Verbrennungsluft dem Regenerativ-Wärmetauscher 17. Die über die Leitung 21 in den Wärmetauscher eingeführte Verbrennungsluft wird dagegen nach ihrer Aufheizung über die Leitung 25 direkt zur Feuerungsanlage 1 geführt, d.h. sie wird in diesem Falle nicht zur Reinigung oder Regenerierung des Katalysators 5 verwendet.

Es ist ersichtlich, daß im Rahmen des Erfindungsgedankens Abwandlungen und Weiterbildungen der beschriebenen Ausführungsbeispiele verwirklichbar sind. So kann beispielsweise der Katalysator des Ausführungsbeispiels gemäß Fig. 1 ebenso wie der gemäß Fig. 3 mit einem vom Antrieb des Wärmetauschers 17 unabhängigen gesonderten Schrittantrieb versehen sein, welcher die von den Abgasen und dem Reinigungs-Gasstrom durchströmten Abschnitte jeweils in gewissen zeitlichen Abständen weiterschaltet.

Beim Ausführungsbeispiel gemäß Fig. 2 kann die Integration des Katalysators in den Wärmetauscher dadurch noch weitergetrieben werden, daß die Speicherelemente des Wärmetauschers selbst mit einer katalytisch wirkenden Verbindung beschichtet werden, d.h. die Speicherelemente selbst gleichzeitig als Katalysatorelemente wirken. Desweiteren kann der Katalysator — abweichend von den beschriebenen Ausführungsbeispielen — dem Wärmetauscher auch nachgeschaltet werden, wenn dies zur Vermeidung von zu hohen Reaktionstemperaturen im Katalysator erwünscht ist.

Festzuhalten ist auch, daß der Begriff der "katalytisch wirkenden Verbindung" nicht auf Verbindungen im chemischen Sinne beschränkt zu verstehen ist, sondern auch reine Elemente und Gemische solcher Elemente umfaßt, soweit diese die geforderte Katalysatorwirkung erbringen.

**Patentansprüche**

1. Verfahren zur selektiven Beseitigung der Stickoxide in den Abgasen von Feuerungsanlagen durch Einleiten chemischer Verbindungen in die aus der Feuerungsanlage austretenden Abgase zur Reaktion mit den Stickoxiden und anschließende Führung der Abgase durch einen Katalysator zur Beschleunigung und/oder Einleitung der Reaktion, wobei die Durchströmung des Katalysators in einer nur einen Abschnitt des Katalysators umfassenden Zone erfolgt, deren Lage kontinuierlich oder schrittweise geändert und in den Abgasen enthaltene Wärme durch regenerativen Wärmetausch auf die der Feuerungsanlage zuzuführende Verbrennungsluft übertragen wird, dadurch gekennzeichnet, daß der Katalysator mit der der Feuerungsanlage zuzuführenden Verbrennungsluft als Reinigungsgasstrom in einer jeweils zu der von den Abgasen durchströmten Zone versetzten Zone des Katalysators, vorzugsweise im Gegenstrom zu den Abgasen, durchströmt wird.

2. Vorrichtung zur selektiven Beseitigung der Stickoxide in den Abgasen von Feuerungsanlagen (1) mit einem einerseits von den aus der Feuerungsanlage austretenden Abgasen und andererseits von der der Feuerungsanlage zuzuführenden Verbrennungsluft durchströmten, Abgaswärme auf die Verbrennungsluft übertragenden drehantreibbaren Regenerativ-Wärmetauscher (17; 108) und mit einem in unterschiedlichen Zonen von den Abgasen durchströmbaren Katalysator (5; 106) der von in einem Träger angeordneten Katalysatorelementen gebildet wird und eine Antriebsvorrichtung zur schrittweise oder kontinuierlichen Drehung des Trägers relativ zu den Gasanschlüssen für die Abgase aufweist, wobei strömungsseitig vor dem Katalysator eine Einrichtung (9, 11, 13; 109, 111, 113) zur Einleitung wenigstens einer mit den in den Abgasen enthaltenen Stickoxiden reagierenden chemischen Verbindung vorgesehen ist, dadurch gekennzeichnet, daß der Katalysator (5; 106) zu den Gasanschlüssen für die Abgase versetzt Gasanschlüsse für die Zu- und Abfuhr eines Reinigungsgases aufweist, und daß diese Gasanschlüsse für das Reinigungsgas in Reihe zu den Verbrennungsluft-Anschlüssen des Regenerativ-Wärmetauschers (17; 108) geschaltet sind.

3. Vorrichtung nach Anspruch 2, dadurch gekennzeichnet, daß die Katalysatorelemente und die Speicherelemente des Regenerativ-Wärmetauschers (108) in einem gemeinsamen Träger angeordnet sind.

4. Vorrichtung nach Anspruch 2 oder 3, dadurch gekennzeichnet, daß die Katalysatorelemente mit katalytisch wirkenden Verbindungen beschichtete Platten oder Gitter sind, zwischen denen ein Zwischenträger vorgesehen ist.

5. Vorrichtung nach einem der Ansprüche 2 bis 4, dadurch gekennzeichnet, daß die Katalysatorelemente oder der Zwischenträger von einem offenporigen, insbesondere keramischen Substrat gebildet werden, welches mit einer oder mehreren katalytisch wirkenden Verbindung(en) versehen ist.

6. Vorrichtung nach einem der Ansprüche 2 oder 3, dadurch gekennzeichnet, daß die Katalysatorelemente von Schüttkörpern aus Metall gebildet werden, die mittels eines auf ihrer Oberfläche aufgebrachten Zwischenträgers mit der katalytisch wirkenden Beschichtung versehen sind.

7. Vorrichtung nach einem der Ansprüche 2 bis 4, dadurch gekennzeichnet, daß die Katalysatorelemente die katalytisch wirkende(n) Verbindung(en) als Legierungsbestandteil(e) enthalten.

8. Vorrichtung nach einem oder mehreren der Ansprüche 2 bis 7, dadurch gekennzeichnet, daß der Katalysator (17; 106) in axialer Richtung mehrere aufeinanderfolgende Lagen von Katalysatorelementen aufweist, und daß diese Lagen mit unterschiedlichen, katalytisch wirkenden Verbindungen versehen sind.

9. Vorrichtung nach einem der Ansprüche 3 bis 8, dadurch gekennzeichnet, daß der Träger der wärmetauschenden Elemente und der Katalysatorelemente innerhalb des umschließenden Gehäuses in Umfangsrichtung einen Abgas-, einen Luft- und einen Regenerationssektor aufweist.

**Revendications**

1. Procédé d'élimination sélective des oxydes d'azote dans les gaz d'échappement d'installations de chauffe par introduction de liaisons chimiques dans les gaz d'échappement sortant de l'installation de chauffe, en vue de produire une réaction avec les oxydes d'azote, et par un passage immédiat des gaz d'échappement à travers un catalyseur en vue d'accélérer et/ou d'initier la réaction, la traversée du catalyseur s'effectuant en une zone ne comprenant qu'une partie du catalyseur, dont la position est modifiée de manière continue ou pas-à-pas, et la chaleur contenue dans les gaz d'échappement étant transmise, au moyen d'un échange thermique régénérateur, à l'air de combustion à amener à l'installation de chauffe, caractérisé par le fait que le catalyseur est traversé par l'air de combustion servant de courant de gaz de purification et devant être amené à l'installation de chauffe, en une zone du catalyseur qui est chaque fois décalée par rapport à celle traversée par les gaz d'échappement, de préférence à contre-courant par rapport aux gaz d'échappement.

2. Dispositif d'élimination sélective des oxydes d'azote dans les gaz d'échappement d'installations de chauffe (1), comprenant un échangeur de chaleur de type régénérateur (17; 108) entraînable en rotation, transmettant la chaleur des gaz d'échappement à l'air de combustion, traversé, d'une part, par les gaz d'échappement sortant de l'installation de chauffe et, d'autre part, par l'air de combustion à amener à l'installation de chauffe, et un catalyseur (5; 106) susceptible d'être traversé dans des zones différentes par les gaz d'échappement, catalyseur formé par des éléments de catalyseur disposés dans un support et comportant un dispositif d'entraînement pour une mise en rotation pas-à-pas ou continue du support par rapport aux raccordements pour les gaz d'échappement, un dispositif (9, 13; 109, 111, 113) servant à l'introduction d'au moins une liaison chimique réagissant avec les oxydes d'azote contenus dans les gaz d'échappement étant prévu, dans le sens de l'écoulement, en amont du catalyseur, caractérisé par le fait que le catalyseur (5; 106) comporte, décalés par rapport aux raccordements pour les gaz d'échappement, des raccordements pour gaz prévus pour l'amenée et l'évacuation d'un gaz de purification et que ces raccordements pour gaz destinés au gaz de purification sont placés en série par rapport aux raccordements pour l'air de combustion de l'échangeur de chaleur régénérateur (17; 108).

3. Dispositif selon la revendication 2, caractérisé par le fait que les éléments de catalyseur et les éléments d'accumulation de l'échangeur de chaleur régénérateur (108) sont disposés dans un support commun.

4. Dispositif selon la revendication 2 ou 3, caractérisé par le fait que les éléments de catalyseur sont des plaques ou des grilles, recouvertes de liaisons à action catalytique, entre lesquelles est prévu un support intermédiaire.

5. Dispositif selon l'une des revendications 2 à 4, caractérisé par le fait que les éléments de catalyseur ou le support intermédiaire sont formés par un substrat à pores ouverts, en particulier en céramique, qui est pourvu d'une ou de plusieurs liaison(s) à action catalytique.

6. Dispositif selon l'une des revendications 2 ou 3, caractérisé par le fait que les éléments de catalyseur sont formés par des corps en vrac métalliques, pourvus du revêtement à action catalytique au moyen d'un support intermédiaire appliqué sur leur surface.

7. Dispositif selon l'une des revendications 2 à 4, caractérisé par le fait que les éléments de catalyseur contiennent la ou les liaison(s) à action catalytique en tant que composant(s) d'alliage.

8. Dispositif selon une ou plusieurs des revendications 2 à 7, caractérisé par le fait que le catalyseur (17; 106) présente en direction axiale plusieurs couches d'éléments de catalyseur placées les unes au-dessus des autres et que ces couches sont pourvues de liaisons à action catalytique différentes.

9. Dispositif selon l'une des revendications 3 à 8, caractérisé par le fait que le support des éléments échangeurs de chaleur et des éléments de catalyseur présente, à l'intérieur du carter les englobant, en direction périphérique, un secteur de gaz d'échappement, un secteur d'air et un secteur de régénération.

**Claims**

1. Method of selectively removing the nitrogen oxides in the exhaust gases from heating plants by introducing chemical compounds into the exhaust gases leaving the heating plant to react with the nitrogen oxide and subsequently passing the exhaust gases through a catalyst to accelerate and/or initiate the reaction, whereby the flow through the catalyst occurs in a zone which comprises only one section of the catalyst and whose position is continuously or incrementally altered and heat contained in the exhaust gases is transferred by regenerative heat exchange to the combustion air to be supplied to the heating plant, characterised in that the combustion air to be supplied to the heating plant flows through the catalyst as a cleaning gas flow in a zone offset from the zone of the catalyst through which the exhaust gases flow, preferably in countercurrent to the exhaust gases.

2. Apparatus for selectively removing the nitrogen oxides in the exhaust gases from heating plants (1) including a regenerative heat-exchanger (17; 108) which may be driven in rotation and transfers exhaust gas heat to the combustion air and through which flow exhaust gases leaving the heating plant on the one hand and combustion air to be supplied to the heating plant on the other hand and including a catalyst (5; 106) through which the exhaust gases may flow in different zones and which is formed by catalyst elements arranged in a carrier and a drive device for incrementally or continuously rotating the carrier relative to the connections for the exhaust gases, a device (9, 11, 13; 109, 111, 113) for introducing at least one chemical compound which reacts with the nitrogen oxides contained in the exhaust gases being provided upstream of the catalyst, characterised in that the catalyst (5; 106) has gas connections for the supply and discharge of a purifying gas offset from the gas connections for the exhaust gases and that these gas connections for the purifying gas are connected in series with the combustion air connections of the regenerative heat-exchanger (17; 108).

3. Apparatus as claimed in claim 2, characterised in that the catalyst elements and the storage elements of the regenerative heat-exchanger (108) are arranged in a common carrier.

4. Apparatus as claimed in claim 2 or 3, characterised in that the catalyst elements are plates or grids which are coated with catalytically active compounds and between which an intermediate carrier is provided.

5. Apparatus as claimed in one of claims 2 to 4, characterised in that the catalyst elements or the intermediate carrier are constituted by an open-pored, particularly ceramic, substrate which is provided with one or more catalytically active compound(s).

6. Apparatus as claimed in one of claims 2 or 3, characterised in that the catalyst elements are formed by loose bodies of metal which are provided with the catalytically active coating by means of an intermediate carrier applied to the surface.

7. Apparatus as claimed in one of claims 2 to 4, characterised in that the catalytic elements contained in the catalytically active compound(s) has one or more alloy components.

8. Apparatus as claimed in one or more of claims 2 to 7, characterised in that the catalyst (17; 106) has a plurality of successive layers of catalyst elements in the axial direction and that these layers are provided with different, catalytically active compounds.

9. Apparatus as claimed in one of claims 3 to 8, characterised in that the carrier for the heat-exchanging elements and the catalyst elements has an exhaust gas, an air and a regeneration sector in the peripheral direction within the surrounding housing.

# Fig. 1

# Fig. 2

EP 0 172 246 B1

3